# EUROPEAN PATENT APPLICATION

(11) **EP 4 528 955 A1**
(43) Date of publication of application: **26.03.2025**
(21) Application number: 24201300.1
(22) Date of filing: 19.09.2024
(51) Int. Cl.: H02J 1/14, H02J 7/00

(54) **POWER SUPPLY APPARATUS, POWER SUPPLY SYSTEM, AND CONTROL METHOD**

(30) Priority: 25.09.2023 JP 2023159405
(71) Applicant: Alps Alpine Co., Ltd., Ota-ku, Tokyo 145-8501 (JP)
(72) Inventor: Sato, Tetsuo, Iwaki-city, Fukushima (JP)
(74) Representative: Schmitt-Nilson Schraud Waibel Wohlfrom Patentanwälte Partnerschaft mbB

(57) **Abstract**

A power supply apparatus (1) includes an electric power supply circuit (21) that supplies electric power to a plurality of connected devices (2, 3), and a controller (20) having a function to determine a distribution of electric power to be supplied to each of the plurality of connected devices within a range in which total electric power supply does not exceed an upper limit value by performing a negotiation before the electric power starts to be supplied to each of the plurality of connected devices. After the electric power starts to be supplied to each of the plurality of connected devices in accordance with the distribution based on the negotiation, if the controller receives a request for a reduction in electric power to be supplied to one device, the controller reflects the reduction in the electric power, and redetermines a distribution of electric power to be supplied to each of the plurality of connected devices.

## Description

The present disclosure relates to a power supply apparatus, a power supply system, and a control method, and, more particularly, to a power supply apparatus configured to simultaneously supply electric power to a plurality of devices, a power supply system including the power supply apparatus, and a control method performed by the power supply apparatus.

A power supply apparatus configured to be connectable to a plurality of devices and capable of supplying electric power to each of the plurality of devices is known. In particular, USB Power Delivery (PD), which is a charging standard of USB Type-C, can supply a large amount of electric power. Power supply apparatuses compatible with USB PD, including a plurality of connectors, and configured to supply electric power to a plurality of devices connected to the plurality of connectors have been widely used.

With respect to such a power supply apparatus that can supply electric power to each of a plurality of devices, JP2018-206394 A (Patent Document 1) describes the following technique. That is, a hub 10 described in Patent Document 1 is a power supply apparatus connected to an electronic device 7 (device) and a mobile device 8 (device), supplying electric power to the devices, and charging the devices. The hub 10 includes a power module 12 that supplies electric power to the devices, and a power distribution control circuit 13 that measures an electric power value of electric power supplied by the power module 12. When supplying electric power to the electronic device 7 and the mobile device 8, the hub 10 adjusts electric power to be supplied to the electronic device 7 and electric power to be supplied to the mobile device 8, such that an electric power value measured by the power distribution control circuit 13 does not exceed an upper limit value at or below which electric power can be stably supplied by the power module 12. The above technique is described. According to Patent Document 1, the total output power of the power supply apparatus can be appropriately automatically distributed.

JP2019-109898 A (Patent Document 2) describes the following technique. That is, a master controller 124 included in a device acquires charger capability information, which is information on the capability of a charger, from a USB charger 110 (power supply apparatus), and sets an optimum power supply level based on the charger capability information and device charging capability information. The above technique is described. According to Patent Document 2, a mismatch between a charging level and a power supply level can be suppressed.

As suggested in Patent Document 1, in a case where electric power is supplied from a power supply apparatus to a plurality of connected devices, typically, after a distribution of electric power to be supplied to each of the devices is determined, the electric power is supplied in accordance with the determined distribution. Further, in the related-art, in a power supply apparatus that can supply electric power to a plurality of devices and communicate with the devices, the following process is performed for electric power distribution. Note that an apparatus compatible with USB PD corresponds to a power supply apparatus of this type. That is, when electric power is supplied to a plurality of connected devices, a negotiation is performed between the power supply apparatus and each of the devices before electric power starts to be supplied to each of the devices. Then, the power supply apparatus determines a distribution of electric power in accordance with the results of the negotiation. Thereafter, the power supply apparatus does not change the distribution unless a situation occurs in which the supply of the electric power is reset and a negotiation is performed again due to a device being re-inserted or removed, being turned on or off, or the like. Conversely, if a situation occurs in which electric power supplied to a device needs to be changed after electric power starts to be supplied to the plurality of devices, the device transmits a request to the power supply apparatus and requests a change in the electric power supplied to the device. The above process is performed.

The related-art technique in which the above-described process is performed has the following problem. That is, for example, it is assumed that a first device and a second device are connected to the power supply apparatus, and electric power is supplied in accordance with the distribution based on a negotiation. In such a situation, if electric power supplied to the second device needs to be reduced, the second device transmits a request for a reduction in the electric power to the power supply apparatus, and the power supply apparatus reduces the electric power to be supplied to the second device in accordance with the request. In such a case, a surplus is generated in the power supply capacity of the power supply apparatus by the amount corresponding to the reduction in the electric power to be supplied to the second device. This state continues, and becomes a factor that hinders efficient electric power supply.

It is an object of the present disclosure to enable a power supply apparatus, capable of supplying electric power to a plurality of connected devices and communicating with the plurality of connected devices, to efficiently supply the electric power to the plurality of connected devices.

The present disclosure relates to a power supply apparatus, a power supply system and a control method according to the appended claims. Embodiments are disclosed in the dependent claims. A power supply apparatus according to an aspect of the present disclosure includes an electric power supply circuit configured to supply electric power to a plurality of connected devices; and a controller having a function to control the electric power supplied by the electric power supply circuit, a function to communicate with the plurality of connected devices, and a function to determine a distribution of electric power to be supplied to each of the plurality of connected devices within a range in which total electric power supply does not exceed an upper limit value by communicating with each of the plurality of connected devices and performing a negotiation before the electric power starts to be supplied to each of the plurality of connected devices wherein in a case where, after the electric power starts to be supplied to each of the plurality of connected devices in accordance with the distribution based on the negotiation, the controller receives a request from one device among the plurality of connected devices for a reduction in electric power to be supplied to the one device, the controller reflects the reduction in the electric power requested in the request, and redetermines a distribution of electric power to be supplied to each of the plurality of connected devices.

According to an embodiment of the present disclosure, in a case where there is a request from one device among a plurality of connected devices for a reduction in electric power to be supplied to the one device after electric power starts to be supplied to each of the plurality of connected devices in accordance with a distribution based on a negotiation, the reduction in the electric power requested in the request is reflected and a distribution of electric power to be supplied to each of the plurality of connected devices is redetermined. Accordingly, a new distribution of electric power can be determined without waiting for a situation in which the next negotiation is performed, and thus efficient electric power supply can be achieved. That is, according to the present disclosure, the power supply apparatus capable of supplying electric power to a plurality of connected devices and communicating with each of the devices can efficiently supply the electric power to the plurality of connected devices.
FIG. 1 is a block diagram illustrating an example functional configuration of a power supply apparatus according to an embodiment;
FIGS. 2A, 2B, and 2C are diagrams illustrating states of electric power supply by the power supply apparatus;
FIG. 3 is a flowchart illustrating an example operation of a power supply system;
FIGS. 4A and 4B are diagrams used to described a problem in the related-art;
FIGS. 5A and 5B are diagrams used to described the problem in the related-art;
FIG. 6 is a flowchart illustrating an example operation of a power supply system; and
FIGS. 7A and 7B are diagrams each illustrating a relationship between a power supply upper limit value and an electric power distribution.

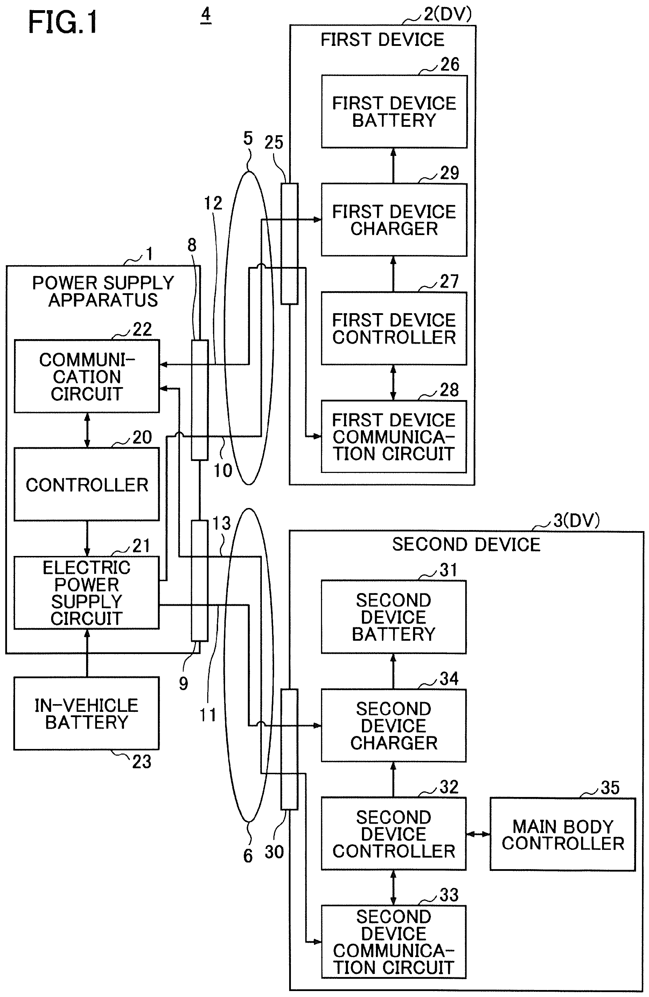

Embodiments of the present disclosure will be described below with reference to the accompanying drawings. FIG. 1 is a diagram illustrating an example functional configuration of a power supply apparatus 1 according to an embodiment, together with a first device 2 and a second device 3 connected to the power supply apparatus 1. A power supply system 4 is constituted by the power supply apparatus 1 and one or more devices connected to the power supply apparatus 1. The power supply system 4 preferably is compliant with USB Type-C, the power supply apparatus 1 and the first device 2 are connected to each other via a USB Type-C cable 5 (hereinafter referred to as a "first cable 5"), and the power supply apparatus 1 and the second device 3 are connected to each other via a USB Type-C cable 6 (hereinafter referred to as a "second cable 6").

The power supply apparatus 1 according to an embodiment is an apparatus installed in a vehicle. The power supply apparatus 1 is installed in, for example, a car navigation system, a car audio system, or any other in-vehicle apparatus. The power supply apparatus 1 may be installed in an adapter, or may be an independent apparatus. The power supply apparatus 1 may be an apparatus compliant with USB Power Delivery (PD), and has a function to supply electric power in accordance with USB PD. In particular, the power supply apparatus 1 includes two (a plurality of) connectors, that is, a power supply apparatus first connector 8 and a power supply apparatus second connector 9, and can simultaneously supply electric power to two devices DV that are respectively connected to the power supply apparatus first connector 8 and the power supply apparatus second connector 9. A device DV refers to a device to which electric power is to be supplied from the power supply apparatus 1. The device DV that has received the electric power charges a predetermined battery or supplies electric power to a load. Hereinafter, the expression "the device DV is connected to the power supply apparatus first connector 8 or the power supply apparatus second connector 9 of the power supply apparatus 1 via a cable" may be simply expressed as "the device DV is connected to the power supply apparatus 1".

In an embodiment, each of the power supply apparatus first connector 8 and the power supply apparatus second connector 9 is a receptacle compatible with USB Type-C, and includes a VBUS terminal for supplying a bus voltage, a GND terminal for a ground voltage, and a configuration channel (CC) port. A power supply line corresponding to the power supply apparatus first connector 8 (a line used to supply electric power to a device DV connected to the power supply apparatus first connector 8) is hereinafter referred to as a first power supply line 10. Further, a power supply line corresponding to the power supply apparatus second connector 9 (a line used to supply electric power to a device DV connected to the power supply apparatus second connector 9) is hereinafter referred to as a second power supply line 11. Further, a CC line corresponding to the power supply apparatus first connector 8 (a communication line used to communicate with the device connected to the power supply apparatus first connector 8) is referred to as a first CC line 12. Further, a CC line corresponding to the power supply apparatus second connector 9 (a communication line used to communicate with the device connected to the power supply apparatus second connector 9) is referred to as a second CC line 13.

The first device 2 is an electronic device. The type of the first device 2 as an electronic device is not limited. The first device 2 is, for example, a laptop computer, a tablet terminal (including a smartphone), a portable game console, or a wearable terminal (but is not limited thereto).

The second device 3 is an electronic device. Similar to the first device 2, the second device 3 may be any type of electronic device; however, in the present embodiment, the second device 3 is a smartphone. A user in the vehicle in which the power supply apparatus 1 is installed can connect his/her smartphone to the power supply apparatus 1 and charge the smartphone.

As illustrated in FIG. 1, the power supply apparatus 1 includes a controller 20, an electric power supply circuit 21, and a communication circuit 22.

The controller 20 may be a controller compatible with USB PD and USB Type-C, and includes an IC in which various circuits including a processor are integrated. The controller 20 executes processing in cooperation with hardware and software by causing, for example, a processor to read and execute a program stored in a predetermined memory.

The communication circuit 22 includes transceivers for communication via the first CC line 12 and the second CC line 13, and communicates with the devices DV as controlled by the controller 20. Hereinafter, it is assumed that communication with the devices DV by the power supply apparatus 1 is appropriately executed by the communication circuit 22, and a detailed description of the communication itself will be omitted. The controller 20 has a function to communicate with each of the devices DV connected to the power supply apparatus 1 via the communication circuit 22.

The electric power supply circuit 21 includes a power source circuit including a DC/DC converter, a switch element that opens and closes each of the first power supply line 10 and the second power supply line 11, and other elements (for example, a necessary switch and a necessary capacitor). The electric power supply circuit 21 receives electric power from an in-vehicle battery 23, which is an external power source. The electric power supply circuit 21 converts a voltage of the in-vehicle battery 23, which is the external power source, into an appropriate voltage as controlled by the controller 20, and then supplies electric power to one or more devices DV connected to the power supply apparatus 1 via the first power supply line 10 and the second power supply line 11. The in-vehicle battery 23 is a battery installed in the vehicle.

The controller 20 has a function to control electric power supplied from the electric power supply circuit 21. That is, the controller 20 can control the electric power supply circuit 21 to supply electric power with a specific voltage value and a specific maximum current value (an upper limit value of a current) to each of the devices DV connected to the power supply apparatus 1. Note that with respect to electric power supplied from the power supply apparatus 1, a current value basically varies according to the situation on the device DV side, but cannot exceed the maximum current value set on the power supply apparatus 1 side. Hereinafter, when a "current" is simply used with respect to electric power supplied from the power supply apparatus 1, the "current" means a "current less than or equal to the maximum current value" unless otherwise specified. In addition, when a "current value" is used with respect to electric power supplied from the power supply apparatus 1, the "current value" means a "maximum current value" (an upper limit value of the current value) unless otherwise specified. In addition, with respect to electric power supplied from the power supply apparatus 1, a combination of a voltage value and a current value may be referred to as "power-related values".

As illustrated in FIG. 1, the first device 2 includes a first device connector 25 compatible with USB Type-C. The first device connector 25 is configured as a receptacle to which a plug can be connected. The first device connector 25 and the power supply apparatus first connector 8 of the power supply apparatus 1 are connected to each other via the first cable 5. Further, the first device 2 includes a first device battery 26 therein. The first device battery 26 is a secondary battery.

As illustrated in FIG. 1, the first device 2 includes a first device controller 27, a first device communication circuit 28, and a first device charger 29 as functional blocks.

The first device controller 27 is a controller compliant with USB PD and USB Type-C, and includes an IC in which various circuits including a processor are integrated. The first device controller 27 executes processing in cooperation with hardware and software by causing, for example, a processor to read and execute a program stored in a predetermined memory.

The first device communication circuit 28 includes a transceiver for communication via the first CC line 12, and enables communication with the power supply apparatus 1 as controlled by the first device controller 27. Hereinafter, it is assumed that communication with the power supply apparatus 1 by the first device 2 is appropriately executed by the first device communication circuit 28, and a detailed description of the communication itself will be omitted. The first device controller 27 has a function to communicate with the controller 20 via the first device communication circuit 28.

The first device charger 29 includes a charging circuit including a DC/DC converter, a switch element that opens and closes the first power supply line 10, and other elements (for example, a necessary switch and a necessary capacitor). The first device charger 29 receives electric power from the electric power supply circuit 21 of the power supply apparatus 1 via the first power supply line 10. The first device charger 29 charges the first device battery 26 by adjusting a voltage/current, adjusting a timing of electric power supply, and performing any other necessary processing related to charging as controlled by the first device controller 27.

Although not illustrated, the first device 2 includes a load that receives electric power from the first device battery 26.

As described above, the second device 3 is a smartphone. As illustrated in FIG. 1, the second device 3 includes a second device connector 30 compatible with USB Type-C. The second device connector 30 is configured as a receptacle to which a plug can be connected. The second device connector 30 and the power supply apparatus second connector 9 of the power supply apparatus 1 are connected to each other via the second cable 6. Further, the second device 3 includes a second device battery 31 therein. The second device battery 31 is a secondary battery.

As illustrated in FIG. 1, the second device 3 includes a second device controller 32, a second device communication circuit 33, a second device charger 34, and a main body controller 35 as functional blocks.

The second device controller 32 is a controller compliant with USB PD and USB Type-C, and includes an IC in which various circuits including a processor are integrated. The second device controller 32 executes processing in cooperation with hardware and software by causing, for example, a processor to read and execute a program stored in a predetermined memory.

The second device communication circuit 33 includes a transceiver for communication via the second CC line 13, and enables communication with the power supply apparatus 1 as controlled by the second device controller 32. Hereinafter, it is assumed that communication with the power supply apparatus 1 by the second device 3 is appropriately executed by the second device communication circuit 33, and a detailed description of the communication itself will be omitted. The second device controller 32 has a function to communicate with the controller 20 via the second device communication circuit 33.

The second device charger 34 includes a charging circuit including a DC/DC converter, a switch element that opens and closes the second power supply line 11, and other elements (for example, a necessary switch and a necessary capacitor). The second device charger 34 receives electric power from the electric power supply circuit 21 of the power supply apparatus 1 via the second power supply line 11. The second device charger 34 charges the second device battery 31 by adjusting a voltage/current, adjusting a timing of electric power supply, and performing any other necessary processing related to charging as controlled by the second device controller 32.

The main body controller 35 includes a processor. The main body controller 35 controls each part of the second device 3 based on an operating system (OS) of the second device 3 that is a smartphone, an application operating on the OS, and other programs. The main body controller 35 can communicate with the second device controller 32. Further, the main body controller 35 can communicate with the second device controller 32 and control the second device charger 34 via the second device controller 32. The expression "the main body controller 35 controls the second device charger 34 via the second device controller 32" may be hereinafter simply expressed as "the main body controller 35 controls the second device charger 34". In the present embodiment, the main body controller 35 is configured to control the second device charger 34 via the second device controller 32; however, the main body controller 35 may be configured to directly control the second device charger 34.

Although not illustrated, the second device 3 includes a load that receives electric power from the second device battery 31.

Next, an operation of the power supply system 4 when a plurality of devices DV are connected to the power supply apparatus 1 and the power supply apparatus 1 starts to supply electric power to the plurality of devices DV will be described with reference to an example.

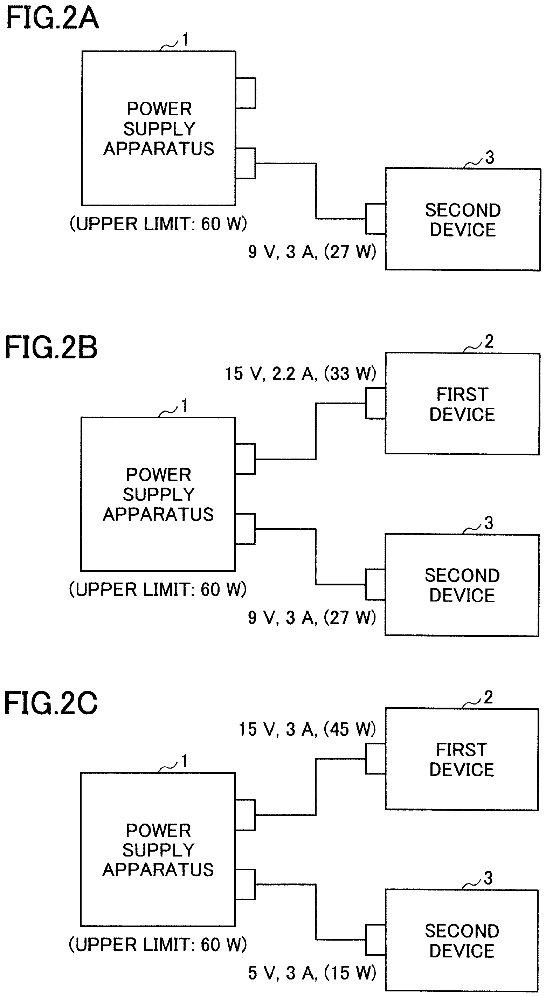

In the following, first, it is assumed that the second device 3 is connected to the power supply apparatus 1. Upon the second device 3 being connected to the power supply apparatus 1, the controller 20 of the power supply apparatus 1 detects the connection. After detecting the connection, the controller 20 communicates with the second device controller 32 of the second device 3, performs a negotiation, and determines power-related values of electric power to be supplied to the second device 3. In this negotiation, the controller 20 receives desired power-related values (a voltage value and a current value) from the second device controller 32. In the following, power-related values desired by a device DV are referred to as "desired power-related values". In this example, the desired power-related values of the second device 3 are 9 V and 3 A (27 W). Further, in this example, it is assumed that the controller 20 determines that power-related values of electric power to be supplied to the second device 3 are 9 V and 3 A (27 W). The power-related values of the electric power to be supplied to the device DV, which are determined by the controller 20, are referred to as "determined power-related values". Thereafter, the controller 20 controls the electric power supply circuit 21 to supply the electric power to the second device 3 in accordance with the determined power-related values (9 V and 3 A in this example). FIG. 2A illustrates a state at this time.

After the state of FIG. 2A, the first device 2 is connected to the power supply apparatus first connector 8. In the following, an operation of the power supply system 4 when the first device 2 is connected to the power supply apparatus first connector 8 will be described.

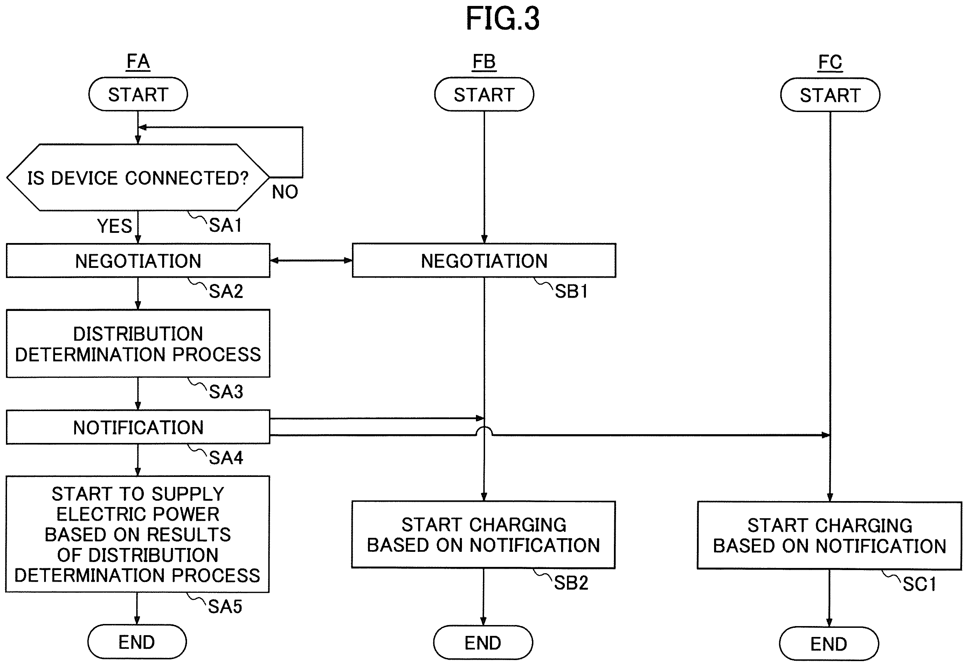

FIG. 3 is a flowchart illustrating operations of the power supply apparatus 1, the first device 2, and the second device 3. A flowchart FA illustrates a control method by the power supply apparatus 1, a flowchart FB illustrates a control method by the first device 2, and a flowchart FC illustrates a control method by the second device 3. At a time point at which the flowchart illustrated in FIG. 3 starts, as illustrated in FIG. 2A, only the second device 3 is connected to the power supply apparatus 1, and the electric power of 9 V and 3 A is supplied to the second device 3 from the power supply apparatus 1.

As illustrated in the flowchart FA, the controller 20 of the power supply apparatus 1 monitors whether a device DV is connected to the power supply apparatus first connector 8 (step SA1). In this example, it is assumed that the first device 2 is connected to the power supply apparatus first connector 8 during the monitoring in step SA1. Upon the controller 20 detecting that the first device 2 is connected to the power supply apparatus first connector 8 (YES in step SA1), the controller 20 and the first device controller 27 of the first device 2 perform a negotiation in accordance with a protocol (step SA2 and step SB1). In this negotiation, the controller 20 receives desired power-related values from the first device controller 27. In this example, it is assumed that desired power-related values of the first device 2 are 15 V and 3 A (45 W) .

Next, the controller 20 executes a distribution determination process based on the desired power-related values (step SA3). The distribution determination process is a process of determining a distribution of electric power to be supplied to a plurality of connected devices DV (in this example, the first device 2 and the second device 3). The distribution determination process in step SA3 will be described in detail below.

An upper limit value of electric power that can be simultaneously supplied to all the devices DV connected to the power supply apparatus 1 (hereinafter referred to as a "power supply upper limit value") is set for the power supply apparatus 1 in advance. A total value of electric power to be simultaneously supplied to the devices DV cannot exceed the power supply upper limit value. The total value of the electric power to be supplied to all the connected devices DV is hereinafter referred to as a "total power supply value". The power supply upper limit value is appropriately set, considering that electric power (power source) is supplied from the in-vehicle battery 23. In this example, the power supply upper limit value is "60 W". Because the power supply upper limit value is 60 W, the power supply apparatus 1 cannot supply electric power of 45 W to the first device 2 and cannot supply electric power of 27 W to the second device 3. This is because a total power supply value (45 W + 27 W = 72 W) exceeds the power supply upper limit value (60 W).

In the distribution determination process in step SA3, the controller 20 determines a distribution of electric power to be supplied to each of the first device 2 and the second device 3 in accordance with the following conditions.
<Condition R1> A total power supply value is set to be less than or equal to the power supply upper limit value and as close as possible to the power supply upper limit value.
<Condition R2> Electric power distributed to the first device 2 and electric power distributed to the second device 3 are set to be as close as possible to desired power-related values of the first device 2 and desired power-related values of the second device 3, respectively. However, voltage values of the electric power to be supplied do not exceed voltage values of the desired power-related values.

In this example, as illustrated in FIG. 2A, at a time point at which the first device 2 is connected, electric power supplied to the second device 3 is 27 W at 9 V and 3 A. The desired power-related values of the first device 2 are 15 V and 3 A. In this case, if power-related values of electric power supplied to the first device 2 are set to the desired power-related values without changing the power-related values of the electric power supplied to the second device 3, a total power supply value (27 W + 45 W = 72 W) exceeds the power supply upper limit value (60 W). Therefore, the controller 20 does not perform such a distribution, and performs, for example, the following distribution.

That is, the controller 20 does not change the power-related values of the electric power supplied to the first device 2, and determines power-related values of electric power supplied to the second device 3 to be 15 V and 2.2 A (33 W). By determining the power-related values in this manner, the conditions R1 and R2 are satisfied. That is, with respect to the condition R1, a total power supply value (33 W + 27 W) is less than or equal to the power supply upper limit value (60 W) and is as close as possible to the power supply upper limit value (60W). In addition, with respect to the condition R2, the electric power (15 V and 2.2 A) distributed to the first device 2 and the electric power (9 V and 3 A) distributed to the second device 3 are as close as possible to the desired power-related values (15 V and 3 A) of the first device 2 and the desired power-related values (9 V and 3 A) of the second device 3, respectively.

The conditions R1 and R2 are set as conditions followed by the controller 20 when determining a distribution of electric power to be supplied; however, the conditions are not limited thereto. In particular, if there is a condition defined by the protocol, the controller 20 determines a distribution so as to satisfy this condition as well. Further, in the distribution determination process, the controller 20 may communicate with the first device controller 27 and the second device controller 32 and exchange various kinds of information. The same applies to a redistribution process described later.

In this example, in the distribution determination process, as illustrated in FIG. 2B, the controller 20 determines the power-related values of the electric power supplied to the first device 2 (that is, determined power-related values for the first device 2) to be 15 V and 2.2 A (33 W), and further determines the power-related values of the electric power supplied to the second device 3 (that is, determined power-related values for the second device 3) to be 9 V and 3 A.

As illustrated in the flowchart FA, after the distribution determination process in step SA3, the controller 20 sends a notification about the determined power-related values (15 V and 2.2 A), determined for the first device 2, to the first device controller 27, and sends a notification about the determined power-related values (9 V and 3 A), determined for the second device 3, to the second device controller 32 (step SA4). Next, the controller 20 starts to supply the electric power to the first device 2 and the electric power to the second device 3 in accordance with the distribution determined in the distribution determination process (step SA5). Specifically, the controller 20 controls the electric power supply circuit 21 to supply the electric power, corresponding to the determined power-related values for the first device 2, to the first device 2, and supply the electric power, corresponding to the determined power-related values for the second device 3, to the second device 3 .

As illustrated in the flowchart FB, in response to receiving the notification in step SA4, the first device controller 27 controls the first device charger 29 to start to charge the first device battery 26 based on the electric power supplied from the power supply apparatus 1.

As illustrated in the flowchart FC, in response to receiving the notification in step SA4, the second device controller 32 controls the second device charger 34 to start to charge the second device battery 31 based on the electric power supplied from the power supply apparatus 1.

As described above, the controller 20 according to the present embodiment has a function to determine a distribution of electric power to be supplied to each of a plurality of devices DV within a range in which total electric power supply does not exceed an upper limit value by communicating with each of the plurality of devices DV and performing a negotiation before starting to supply the electric power to each of the plurality of devices DV.

Next, an operation of the power supply system 4 when a situation occurs in which electric power supplied to a given device DV needs to be reduced while the power supply apparatus 1 is supplying electric power to a plurality of devices DV will be described.

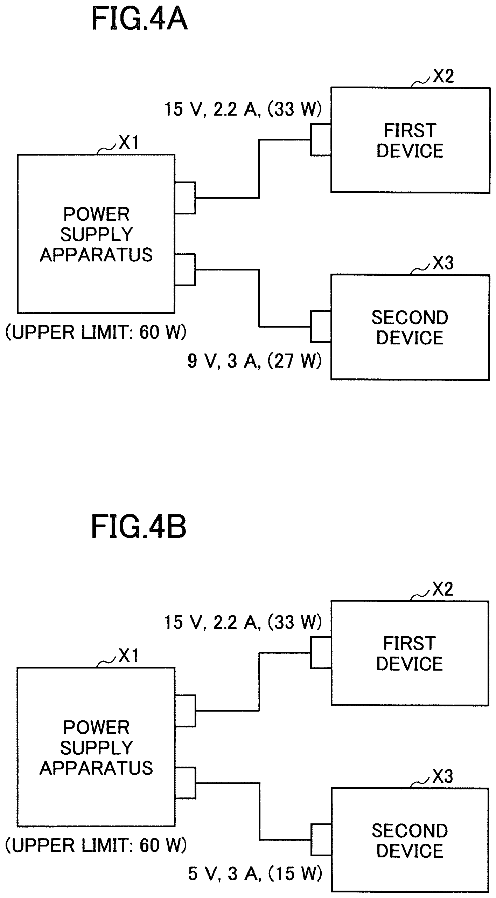

Before describing the operation of the power supply system 4, a problem related to the supply of electric power to a plurality of devices by a power supply apparatus in the related-art will be described. FIG. 4A and FIG. 4B are diagrams used to describe the problem in the related-art. As illustrated in FIG. 4A, it is assumed that a first device X2 and a second device X3 are connected to a power supply apparatus X1, and electric power is supplied to the first device X2 and the second device X3 in accordance with a distribution based on a negotiation. Specifically, as in FIG. 2B, it is assumed that electric power of 33 W at 15 V and 2.2 A is supplied to the first device X2, and electric power of 27 W at 9 V and 3 A is supplied to the second device X3. Further, it is assumed that a power supply upper limit value of the power supply apparatus X1 is 60 W.

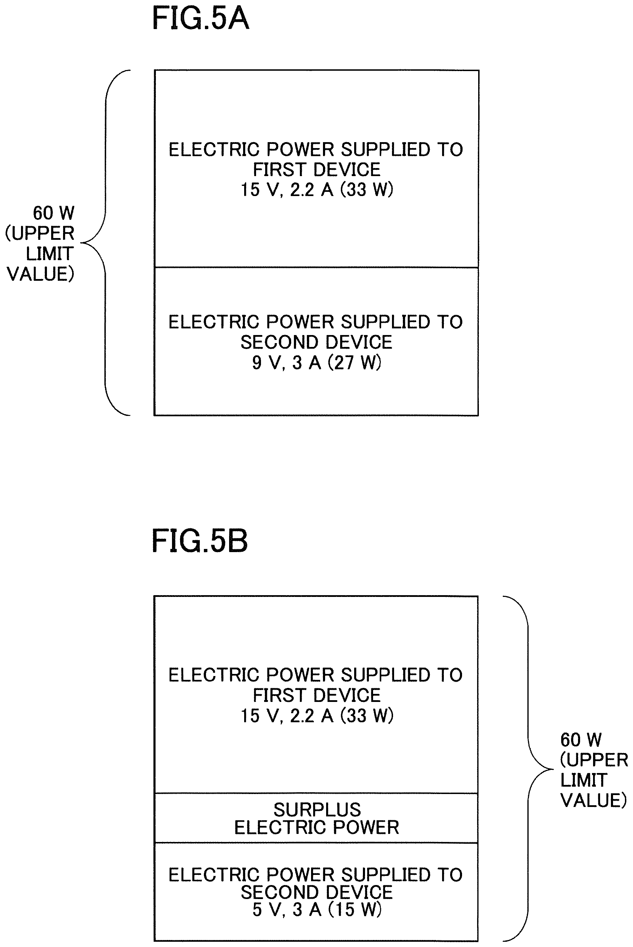

FIG. 5A is a diagram illustrating a relationship between the power supply upper limit value and an electric power distribution in the above situation. As illustrated in FIG. 5A, in the above situation, a total power supply value is equal to the power supply upper limit value, and efficient electric power supply is achieved.

Note that the related-art power supply apparatus X1 does not change the electric power distribution unless a situation occurs in which the supply of the electric power is reset and a negotiation is performed again due to a device being re-inserted or removed, being turned on or off, or the like.

In the above situation, if the electric power supplied to the second device X3 needs to be reduced, the second device X3 transmits a request for a reduction in the electric power to the power supply apparatus X1. In this example, it is assumed that the request is to reduce the electric power from 9 V and 3 A to 5 V and 3 A. The power supply apparatus X1 reduces the electric power supplied to the second device X3 from 9 V and 3 A to 5 V and 3 A in accordance with the request (see FIG. 4B). As a result, the following event occurs.

FIG. 5B is a diagram illustrating a relationship between the power supply upper limit value after the electric power is reduced based on the request and an electric power distribution. When the electric power supplied to the second device X3 is reduced based on the request, the determined power-related values for the second device X3 become 5 V and 3 A (15 W). As a result, as illustrated in FIG. 5B, a surplus of 12 W is generated in the power supply capacity of the power supply apparatus X1 due to the reduction in the electric power supplied to the second device X3. This surplus is electric power capable of being originally supplied by the power supply apparatus X1. In addition, a state in which the surplus is generated means that efficient electric power supply is not achieved. Further, the state in which the surplus is generated is not solved unless a situation occurs in which the supply of the electric power is reset and a negotiation is performed again due to a device being re-inserted or removed, being turned on or off, or the like.

As described above, in the related art, there is a problem in that, when electric power supplied to a device is reduced based on a request, surplus electric power (electric power capable of being originally supplied but is not supplied) is generated and efficient electric power supply is hindered. In order to solve the above-described problem, the power supply system 4 according to the present embodiment performs the following process.

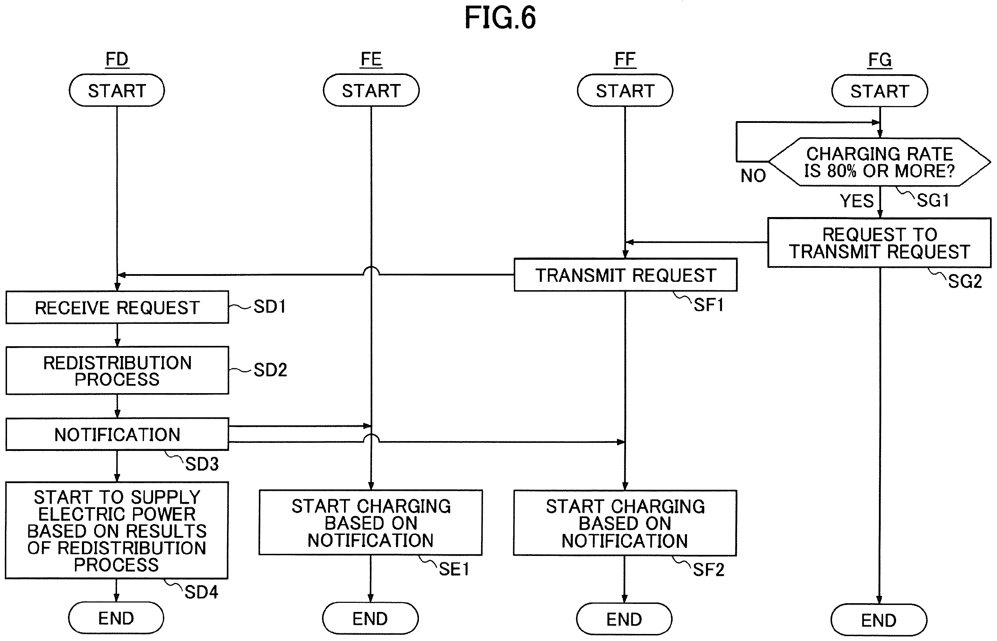

FIG. 6 is a flowchart illustrating operations of the power supply apparatus 1, the first device 2, and the second device 3. A flowchart FD illustrates a control method by the power supply apparatus 1, a flowchart FE illustrates a control method by the first device 2, a flowchart FF illustrates a control method by the second device controller 32 of the second device 3, and a flowchart FG illustrates a control method by the main body controller 35 of the second device 3. A time point at which the flowchart of FIG. 6 starts is after a time point at which the flowchart of FIG. 3 ends. Therefore, at the time point at which the flowchart of FIG. 6 starts, as illustrated in FIG. 2B, the first device 2 and the second device 3 are connected to the power supply apparatus 1, the electric power of 15 V and 2.2 A is supplied to the first device 2, and the electric power of 9 V and 3 A is supplied to the second device 3.

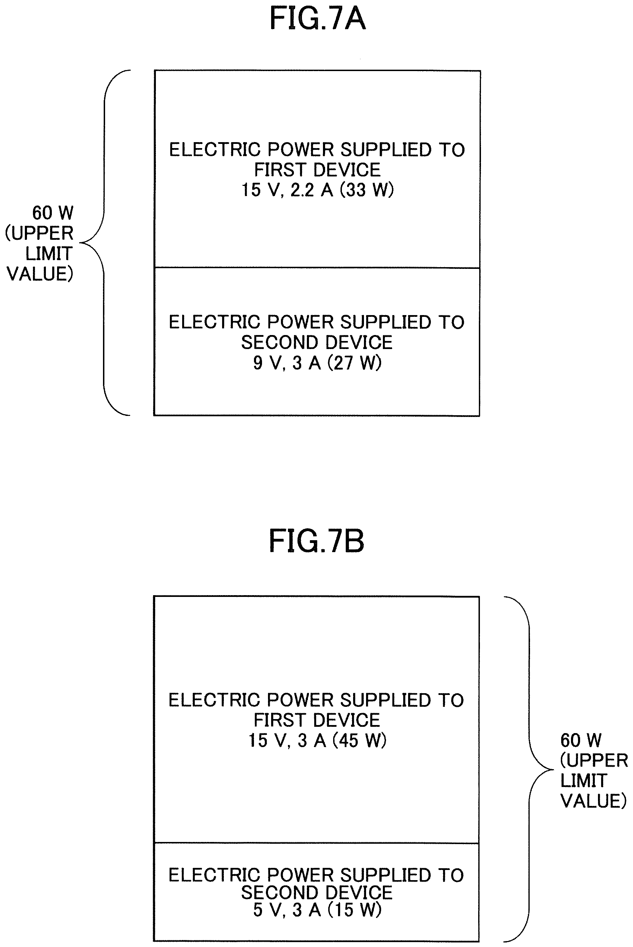

FIG. 7A is a diagram illustrating a relationship between the power supply upper limit value and an electric power distribution in the above state. The content illustrated in FIG. 7A is the same as the content illustrated in FIG. 5A. In this state, the power supply upper limit value and a total power supply value are equal to each other, and efficient electric power supply is achieved

Further, at the time point at which the flowchart of FIG. 6 starts, it is assumed that the charging rate of the second device battery 31 of the second device 3 is below 80%. The main body controller 35 has a function described below. That is, if the charging rate of the second device battery 31 is below 80%, the main body controller 35 controls the second device charger 34 to charge the second device battery 31 with 9 V. Note that there may be a case where electric power higher than or equal to 9 V is not supplied due to circumstances on the power supply side (source side). In such a case, the main body controller 35 charges the second battery 31 with a lower voltage. Then, when the charging rate changes from a value below 80% to a value higher than or equal to 80%, the main body controller 35 performs necessary processing and then controls the second device charger 34 to charge the second device battery 31 with 5 V. The main body controller 35 has the above-described function. A function to reduce a charging voltage when the charging rate of a battery becomes higher than or equal to a threshold value is widely implemented not only in smartphones, but also in many electronic devices.

As illustrated in the flowchart FG of FIG. 6, the main body controller 35 monitors whether the charging rate of the second device battery 31 becomes 80% or more (step SG1). If the main body controller 35 detects that the charging rate is 80% or more (YES in step SG1), the main body controller 35 communicates with the second device controller 32, and requests the second control unit 32 to transmit a "request for a reduction in the electric power" to the controller 20 of the power supply apparatus 1 (step SG2). In this example, the request is to reduce the power-related values of the electric power from 9 V and 3 A to 5 V and 3 A.

As described above, the second device 3 (one device) has a function to charge the second device battery 31 (battery) in response to receiving the supply of electric power, and a function to transmit a request in accordance with the state of the second device battery 31.

As illustrated in the flowchart FF, the second device controller 32 transmits a request in response to the request from the main body controller 35 (step SF1).

As illustrated in the flowchart FD, the controller 20 of the power supply apparatus 1 receives the request (step SD1). Next, the controller 20 executes a redistribution process based on the received request (step SD2). The redistribution process is a process of redetermining a redistribution of electric power to be supplied to the first device 2 and the second device 3. In the redistribution process, the controller 20 redetermines a distribution of electric power according to the following conditions.

<Condition R1'> Electric power is allocated to the first device 2 by an amount corresponding to a reduction with respect to the second device 3 within a range in which a total power supply value does not exceed the power supply upper limit value. Further, the total power supply value after the allocation is set to be as close as possible to the power supply upper limit value.

<Condition R2'> Electric power distributed to the first device 2 is set to be as close as possible to desired power-related values (in this example, 15 V and 3 A (45 W)) of the first device 2. However, a voltage value of the electric power distributed to the first device 2 does not exceed a voltage value of the desired power-related values. Further, electric power distributed to the second device 3 is as set to be close as possible to the "reduced power-related values of the electric power as requested" (in this example, 5 V and 3 A (15 W)). However, a voltage value of the electric power distributed to the second device 3 does not exceed a voltage value of the "reduced power-related values of the electric power as requested". The "reduced power-related values of the electric power as requested" are hereinafter referred to as "requested power-related values".

In this example, as illustrated in FIG. 2C, the controller 20 determines power-related values of electric power to be supplied to the second device 3 to be 5 V and 3 A (15 W) in accordance with the request, and further determines power-related values of electric power to be supplied to the first device 2 to be 15 V and 3 A (45 W). By determining the power-related values in this manner, the conditions R1' and R2' are satisfied. That is, with respect to the condition R1', electric power is allocated to the first device 2 by the amount corresponding to the reduction with respect to the second device 3, and further, a total power supply value (45 W + 15 W = 60 W) is less than or equal to the power supply upper limit value (60 W) and is as close as possible to the power supply upper limit value (60W). In addition, with respect to the condition R2', the electric power (15 V and 3 A) distributed to the first device 2 and the electric power (5 V and 3 A) distributed to the second device 3 are as close as possible to the desired power-related values (15 V and 3 A) of the first device 2 and the requested power-related values (5 V and 3 A) of the second device 3, respectively.

FIG. 7B is a diagram illustrating a relationship between the power supply upper limit value and an electric power distribution in this example. As illustrated in FIG. 7B, in this situation, the total power supply value is equal to the power supply upper limit value, and efficient electric power supply is achieved. This is also apparent from a comparison with FIG. 5B. Efficient electric power supply is achieved by redetermining a distribution of electric power in response to a request for a reduction in electric power and allocating electric power to the first device 2 by an amount corresponding to the reduction.

In this example, in the distribution determination process, as illustrated in FIG. 2C, the controller 20 determines the power-related values of the electric power supplied to the first device 2 (that is, the determined power-related values for the first device 2) to be 15 V and 3 A, and further determines the power-related values of the electric power supplied to the second device 3 (that is, the determined power-related values for the second device 3) to be 5 V and 3 A.

As illustrated in the flowchart FD, after the redistribution process in step SD2, the controller 20 sends a notification about the determined power-related values, determined for the first device 2, to the first device controller 27, and sends a notification about the determined power-related values, determined for the second device 3, to the second device controller 32 (step SD3). Next, the controller 20 starts to supply electric power to the first device 2 and the second device 3 in accordance with the distribution determined in the redistribution process (step SD4). Specifically, the controller 20 controls the electric power supply circuit 21 to supply electric power, corresponding to the determined power-related values for the first device 2, to the first device 2, and supply electric power, corresponding to the determined power-related values for the second device 3, to the second device 3.

As illustrated in the flowchart FE, in response to receiving the notification in step SD3, the first device controller 27 controls the first device charger 29 to start charging the first device battery 26 based on the electric power supplied from the power supply apparatus 1.

As illustrated in the flowchart FF, in response to receiving the notification in step SD3, the second device controller 32 controls the second device charger 34 to start charging the second device battery 31 based on the electric power supplied from the power supply apparatus 1.

As described above, in a case where the controller 20 of the power supply apparatus 1 according to the present embodiment receives a request for a reduction in electric power from one device DV after starting to supply electric power to each of a plurality of connected devices DV in accordance with a distribution based on a negotiation, the controller 20 reflects the reduction in the electric power requested in the request, and redetermines a distribution of electric power to be supplied to each of the plurality of connected devices DV.

With this configuration, in a case where there is a request for a reduction in electric power from one device DV among a plurality of connected devices DV after electric power starts to be supplied in accordance with a distribution based on a negotiation, the reduction in the electric power requested in the request is reflected, and a distribution of electric power to be supplied to each of the plurality of connected devices DV is redetermined. Therefore, a new distribution of electric power can be determined without waiting for a situation in which the next negotiation is performed, and thus efficient electric power supply can be achieved. That is, according to the present disclosure, the power supply apparatus capable of supplying electric power to the plurality of connected devices DV and communicating with each of the devices DV can efficiently supply the electric power to the plurality of connected devices DV.

Although an embodiment of the present invention has been described above, the above-described embodiment merely describes a concrete example for carrying out the present invention. The above-described embodiment is not intended to be construed as limiting the scope of the present invention. Specifically, the present invention may be carried out in various embodiments without departing from the spirit or scope of the present invention.

In the above-described embodiment, the power supply apparatus 1 is installed in the vehicle. However, the power supply apparatus 1 is not necessarily required to be installed in the vehicle. If power of an AC power source such as a commercial power source is supplied to the power supply apparatus 1, the electric power supply circuit 21 includes an AC/DC converter and performs AC/DC conversion appropriately.

The functional blocks illustrated in the above-described embodiment can be implemented by any hardware or by a cooperation of any hardware and any software. That is, these functional blocks are not limited to specific hardware. For example, if a functional block is configured with hardware and software, the functional block can be configured as follows. That is, this functional block includes a CPU, a RAM, and a ROM of a computer. Further, this functional block executes processing by the CPU reading a program stored in the ROM or any other recording medium into the RAM and executing the program.

The power supply apparatus 1 described above includes the connectors (the power supply apparatus first connector 8 and the power supply apparatus second connector 9). However, the power supply apparatus may be an apparatus of a type in which no connector is provided and a cable conforming to a standard is integrated.

In the above-described embodiment, the controller 20 redetermines a distribution of electric power based on a request transmitted as a trigger upon the charging rate of the second device 3 becoming 80% or more. However, the type of request serving as a trigger for the controller of the power supply apparatus to redetermine a distribution of electric power is not limited to the type of request exemplified in the present embodiment. As an example, in a USB PD programmable power supply (PPS), a request for a change in electric power (naturally, including a reduction in electric power) can be transmitted from a device to the power supply apparatus, and this request may be used as a trigger.

For example, the controller 20 may be configured to execute various processes, including processes described as being executed by the controller 20 alone, in cooperation with an external apparatus. As an example, the controller 20 may execute a process in cooperation with a processor of an apparatus in which the power supply apparatus 1 is installed, or may execute a process in cooperation with an external apparatus with which the controller 20 can communicate via a network.

The processing units of the flowcharts of the above-described embodiment are divided according to the main processing contents in order to facilitate understanding of the processing. The present invention is not limited by a method of dividing the processing units or the names of the processing units. The processing of each apparatus/device can be divided into more processing units according to the processing contents. Further, one processing unit may be further divided so as to include more processing. Further, the processing order of each of the above-described flowcharts is not limited to the illustrated example as long as similar processing can be performed.

Further, for example, the provision of a program executed by a computer of the power supply apparatus 1 may be included in the embodiment. Further, the provision of a recording medium in which the program is recorded so as to be readable by the computer may be included in the embodiment. As the recording medium, a magnetic or optical recording medium or a semiconductor memory device can be used. Specifically, examples of the recording medium include a portable or fixed recording medium such as a flexible disk, an hard disk drive (HDD), a compact disc read-only memory (CD-ROM), a digital versatile disc (DVD), a Blu-ray (registered trademark) disc, a magneto-optical disc, a flash memory, a card type recording medium, and the like.

## Claims

1. A power supply apparatus comprising:
an electric power supply circuit configured to supply electric power to a plurality of connected devices; and
a controller having a function to control the electric power supplied by the electric power supply circuit, a function to communicate with the plurality of connected devices, and a function to determine a distribution of electric power to be supplied to each of the plurality of connected devices within a range in which total electric power supply does not exceed an upper limit value by communicating with each of the plurality of connected devices and performing a negotiation before the electric power starts to be supplied to each of the plurality of connected devices,
wherein in a case where, after the electric power starts to be supplied to each of the plurality of connected devices in accordance with the distribution based on the negotiation, the controller receives a request from one device among the plurality of connected devices for a reduction in electric power to be supplied to the one device, the controller is configured to reflect the reduction in the electric power requested in the request, and to redetermine a distribution of electric power to be supplied to each of the plurality of connected devices.

2. The power supply apparatus according to claim 1, wherein the controller is configured to allocate electric power to a device other than the one device by an amount corresponding to the reduction with respect to the one device within a range in which total electric power supply does not exceed the upper limit value.

3. The power supply apparatus according to claim 1 or 2, wherein the one device is a device having a function to charge a battery in response to receiving supply of electric power, and a function to transmit the request in accordance with a state of the battery.

4. The power supply apparatus according to one of claims 1 to 3, wherein the power supply apparatus is installed in a vehicle.

5. A power supply system comprising:
a power supply apparatus according to one of the preceding claims; and
a plurality of connected devices,
wherein
the electric power supply circuit is configured to supply electric power to the plurality of connected devices

6. A control method performed by a power supply apparatus including an electric power supply circuit configured to supply electric power to a plurality of connected devices, the control method comprising:
determining, by a controller of the power supply apparatus, a distribution of electric power to be supplied to each of the plurality of connected devices within a range in which total electric power supply does not exceed an upper limit value by communicating with each of the plurality of connected devices and performing a negotiation before the electric power starts to be supplied to each of the plurality of connected devices, and
in a case where, after the electric power starts to be supplied to each of the plurality of connected devices in accordance with the distribution based on the negotiation, a request from one device among the plurality of connected devices for a reduction in electric power to be supplied to the one device is received by the controller, reflecting, by the controller, the reduction in the electric power requested in the request, and redetermining, by the controller, a distribution of electric power to be supplied to each of the plurality of connected devices.
